# EUROPEAN PATENT APPLICATION

(11) **EP 4 825 625 A1**
(43) Date of publication of application: **21.10.2026**
(21) Application number: 25171422.6
(22) Date of filing: 17.04.2025
(51) Int. Cl.: B60K 6/26, B60K 6/387, B60K 6/40, B60K 6/405, B60K 6/442, B60K 6/48, F16H 1/02

(54) **A HYBRID MODULE FOR A VEHICLE**

(71) Applicant: Aurobay Sweden AB, 417 55 Göteborg (SE)
(72) Inventor: BURENIUS, Ragnar, 432 65 Väröbacka (SE); JOSEFSSON, Göran, 423 41 Torslanda (SE); SVENSSON, Mattias, 423 72 Säve (SE)
(74) Representative: Zacco Sweden AB

(57) **Abstract**

The present disclosure relates to a hybrid module (1) for a vehicle, which includes an internal combustion engine (2) with a crankshaft (3), and an electric machine (EM) (4) comprising a stator (5) and a rotor (6) mounted within the stator. The rotor (6) is connected to a rotor shaft (7). The module further includes a motor housing (10) that encloses at least a portion of the ICE and the EM. Further, the crankshaft (3) and the rotor shaft (7) are positioned such that their axial extensions (a1, a2) run parallel to each other.

## Description

### TECHNICAL FIELD

The present disclosure relates to a hybrid module for a vehicle. Further, the present disclosure relates to a method for assembling a hybrid module.

### BACKGROUND

Hybrid vehicles combine an internal combustion engine (ICE) with an electric machine (EM) to improve fuel efficiency and reduce emissions. The electric machine assists the internal combustion engine during acceleration and can power the vehicle on its own e.g. at low speeds. This dual-power setup may facilitate to provide smoother performance and reduced fuel consumption, especially in stop-and-go traffic. Many hybrid systems also feature regenerative braking, which captures energy during deceleration and stores it in the battery for later use. Depending on the hybrid architecture, the EM and ICE can operate independently or together to optimize power delivery. These power sources are typically positioned at different parts of the drivetrain to manage power delivery between the EM and ICE. In conventional designs, the internal combustion engine is typically positioned at the front of the vehicle, connected to the transmission. The electric machine (EM) is usually integrated within the powertrain, either placed between the engine and the transmission or mounted directly to the transmission itself.

Hence, even though such configurations may enable the vehicle to meet performance requirements, their bulkiness presents challenges for integration into smaller vehicle platforms. Additionally, the increased size contributes to added system weight, which can negatively impact efficiency.

Thus, even though the solutions of the present art may work well in some situations There is a need for a configuration or the like that is more compact than previous configurations.

### SUMMARY

It is therefore an object of the present disclosure to alleviate at least some of the mentioned drawbacks to provide a hybrid module for a vehicle.

The present disclosure is at least partly based on the insight that a hybrid module comprising a motor housing that accommodates the ICE and the EM, while the crankshaft and the rotor shaft are positioned to have parallel extensions, is more compact than previous solutions while maintaining efficiency during operation.

The present disclosure relates to a hybrid module (also referred to as a "module") for a vehicle comprising an ICE comprising a crankshaft. Further, the module comprises an EM comprising a stator and a rotor accommodated by the stator, the rotor having a rotor shaft. Further, the module comprises a motor housing. The motor housing accommodates at least part of the ICE and at least a part of the EM, wherein the crankshaft and the rotor shaft are positioned to have parallel axial extensions (i.e. being aligned such that their axial extensions run parallel to each other).

Advantageously, the module is compact while allowing, when mounted in a vehicle, the vehicle to perform in accordance with requirements.

The motor housing may accommodate at least part of the ICE and the EM.

The crankshaft and the rotor shaft may have parallel axial extensions that are not in series/side-by-side so that the extensions do not intersect and/or connect. In other words, they maintain a constant separation.

The module may be operable to propel the vehicle and/or charge a battery pack of the vehicle.

The crankshaft may be connected to pistons via connecting rods so to be driven by the pistons as they are pushed by combustion of fuel in the engine cylinders. This motion turns the crankshaft, converting linear motion into rotational motion which can transfer to e.g. the drive shaft. The motion of the pistons may be controlled by opening and closing of the engine's intake and exhaust valves controlled by a camshaft.

The motor housing may comprise a crankcase portion, the crankcase portion enclosing at least part of the crankshaft and at least part of said EM. In some aspects, the crankcase portion may fully encircle/circumfuse the EM and at least partially encircle the crankshaft. For example, the crankcase portion may encircle at least a quarter (semi-encircling) or half of a circumference of the crankshaft. In other aspects, the crankcase portion may partially circumfere the EM also, e.g. encircling at least a quarter or half the EM. The crankcase portion may be one-piece, preferably formed by casting.

In some aspects, the crankcase portion may comprise a lower crankcase portion and an upper crankcase portion wherein the lower crankcase portion accommodates the EM and part of the crankshaft, and the upper crankcase portion accommodates the rest of the crankshaft not accommodated by the lower crankcase portion. Terms like "lower" and "upper" may be interchanged with "first" and "second". Each of the crankcase portions may be a one-piece part. In some aspects, the lower and upper crankcase portion may be a single part.

The hybrid module may further comprise a coupling arrangement for mechanically coupling the EM and the ICE to define a generator connection, wherein the coupling arrangement is operable to enable a range-extender mode that operate the ICE to charge a battery pack via the EM and/or power a load (e.g. so to drive the vehicle/wheels). The coupling arrangement may comprise one or more gears, shafts, bearings or any other suitable component for enabling a mechanical coupling between the EM and the ICE. Preferably, the EM and the ICE are coupled via one or two intermediate shafts. Each shaft may comprise one or more gears.

In some aspects, the hybrid module may comprise a differential, a first clutch operable between a closed state that connect the EM and the ICE and an open state that disconnect the EM from the ICE, a second clutch operable between a closed state that connect the EM and the drive shaft and an open state that disconnect the EM and the drive shaft. Further, the hybrid module may comprise a drive shaft. The differential and clutches may be part of a coupling arrangement for enabling integration between EM and ICE. The coupling arrangement may act as a mechanical link that can connect or disconnect the two power sources depending on driving conditions i.e. to alternate between several driving modes such as electric mode, REX mode, parallel mode. The coupling arrangement may further comprise intermediate shafts and/or gears forming a configuration that enable mechanical connection between the crankshaft and the rotor shaft, or the crankshaft, the rotor shaft and the drive shaft of the vehicle.

The differential and the first and second clutch may be accommodated by the motor housing. Moreover, the drive shaft may also be at least partially accommodated by the motor housing, e.g. such that end portions of the drive shaft protrude to be able to connect to opposite wheel arrangements of the vehicle (wheel hubs etc.)

The motor housing may be casted or formed in any suitable manner. The motor housing may comprise one, two or three parts arranged to be attached together. Each part may define mold/casted parts which may be arranged to join to form the complete housing, i.e. the housing may form one or two split lines or other interface for enabling attachment.

It should be noted that the ICE and the EM comprise any other part/component as appreciated by a skilled person in the art. E.g. the ICE may comprise camshaft, valve, pistons, cylinders, spark plug, connecting rod, fuel injector, cylinder heads, oil pump, etc. All or part of the components may be accommodated by the motor housing. In other aspects, the motor housing may accommodate the EM, coupling arrangement and a lower part of the ICE comprising at least the crankshaft. The coupling arrangement may also be referred to as transmission arrangement.

As appreciated, the EM may comprise an inverter, a stator, a rotor etc. Further, the module may coupleable to a battery pack having a plurality of battery cells. The rotor may rotate relative the stator so that the rotor shaft rotates with the rotor.

The hybrid module may be arranged to operate in:
- an electric mode, wherein in said electric mode the second clutch is in closed (connected) state and the first clutch is open (disconnected) state, the electric mode being operable to propel the vehicle by the EM
- a hybrid mode, HEV, wherein in said HEV mode the first and the second clutch are in closed state, the HEV mode being operable to propel the vehicle by the EM and the ICE in parallel
- a range-extender mode, wherein in said range-extender mode the first clutch is in closed state and the second clutch is in open state, the range-extender mode being operable to generate electrical power using the ICE to recharge the battery pack and/or power a load.

At least a part of the crankcase portion may be an integral part dimensioned to accommodate at least part of said crankshaft and said stator of the EM.

A stator of said EM may be directly attached to said crankcase portion. Accordingly, the EM may be void of a dedicated housing and instead, the crankcase portion may define the EM housing. In other words, The EM stator may be assembled into/accommodated by the same block/crankcase compound that hosts the crankshaft of the engine/ICE. In some aspects, an inverter of the EM which may be connected to the stator may be directly attached to the crankcase portion.

The crankcase portion may be formed by aluminium or any other suitable metal.

At a mounted state of said hybrid module in which the hybrid module is mounted in a vehicle, the rotor shaft may be located below, in front of and/or behind the crankshaft using the vehicle base and/or horizontal surface which the vehicle is standing on as a reference.

The motor housing may comprise/define a crankcase portion, the crankcase portion enclosing at least part of the crankshaft and at least part of said EM, the crankcase portion defining a first chamber and a second chamber, wherein a bottom wall/first wall of the crankcase portion separates the first chamber from said second chamber, wherein the first chamber encloses at least part of the crankshaft and the second chamber encloses least part of said EM.

Advantageously, the same physical structure may provide housings for at least two parts providing improved compactness compared to present art. In some aspects, the EM may be directly attached to one side of the wall of the crankcase portion e.g. via bolts or the like. In other words, the wall may form a receiving interface for fastening the EM thereto. Thus, the same structure may function as an EM housing and a crankcase.

In some aspects, the motor housing comprises an end-plate for said EM, the end-plate being integrally formed with said motor housing. Accordingly, the EM may be inserted into the housing, e.g. the second chamber, wherein the second chamber comprises a vertical structure dimensioned to define an end-plate for the EM. The EM may be arranged to be inserted along its axial extension. Hence, the housing may comprise an opening or the like into which the EM can be inserted. Thus, the end-plate may face the opening. Advantageously, a compact yet convenient structure is provided.

In some aspects, the housing accommodate an inverter of said EM. The inverter may comprise suitable components such as controllers, pulse-width modulators, etc. The inverter may be connectable to a battery pack of a vehicle.

In some aspects, the end-plate extends vertically within said second chamber partitioning the second chamber into a main chamber and a sub chamber, wherein the end-plate comprises an inner surface and an opposite outer surface the inner surface facing the main chamber, the outer surface facing the sub chamber, the main chamber accommodating the EM, the sub-chamber accommodating said inverter.

Advantageously, such an aspect do not only provide a compact structure, it also protects components (mainly the inverter) from dust and dirt.

In another aspect, the end-plate extends vertically, however another wall (which may be connected at one end to the end-plate) extends horizontally to partition the second chamber into a main chamber and a sub chamber.

In some aspects, the hybrid module comprises a secondary EM, wherein the secondary EM is directly, or indirectly (e.g. via connected to a differential to propel the vehicle to define a drive connection, wherein the drive connection is selectively connectable to said generator connection to enable at least one of:
Series-drive mode in which a coupling (e.g. clutch or other coupling) between the two connections is open. Thus, the ICE may drive a generator side, which generates electricity that charges the battery and/or drives a drive side. The drive side drives the wheels of vehicle via EM.
Parallel-drive mode in which a coupling between the two connections is closed. Thus, the ICE drives the wheels. The two EM's can either generate electricity and/or provide power contribution to the propulsion of the wheels, depending on the need.

The present disclosure further relates to a vehicle comprising the hybrid module of any aspect herein.

Further, the present disclosure relates to a method for assembling the hybrid module of any aspect herein comprising the steps of providing a motor housing dimensioned to accommodate an EM and an ICE. Further, mounting the ICE into the motor housing and fastening the EM into the motor housing, preferably by press-fit or bolt. Moreover, preferably, but not necessarily, the step of fastening is performed by directly press-fitting or bolting the stator in the motor housing. The motor housing may be casted in two or more main parts which are arranged to fit by split lines defined in each casting part. For example a first casting part may accommodate the EM and at least part of the crankshaft, a second casting part may accommodate at least part of the crankshaft and other parts of the ICE (e.g. valves etc.).

The method may be referred to as a method for assembling the hybrid module in a motor housing.

### BRIEF DESCRIPTION OF THE DRAWINGS

These and other features and advantages of the present disclosure will now be further clarified and described in more detail, with reference to the appended drawings;
Figure 1 illustrates a cross-sectional view A-A of the hybrid module according to some aspects of the present disclosure;
Figure 2 illustrates an objective view of the hybrid module according to some aspects of the present disclosure;
Figure 3 illustrates a cross-sectional view A-A of the hybrid module according to some aspects of the present disclosure;
Figure 4 illustrates a side cross-sectional view of the hybrid module according to some aspects of the present disclosure;
Figure 5 illustrates a cross-sectional view of a part of the hybrid module emphasizing the EM according to some aspects of the present disclosure;
Figure 6 illustrates schematics of a plurality of driving modes that the hybrid module is operable to function with in accordance with some aspects of the present disclosure;
Figure 7 illustrates an objective view of a vehicle comprising the hybrid module according to some aspects of the present disclosure; and
Figure 8 illustrates a method according to some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and Band C, A and B, Band C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "accommodate" may refer to that an internal geometry of a part (e.g. housing) provides a volume/shape e.g. through one or more of cavities, clearances, and mounting features-to enclose, support, fasten and/or align a component within the volume, or to facilitate/enable support, fastening, mounting and/or alignment of the component within the volume.

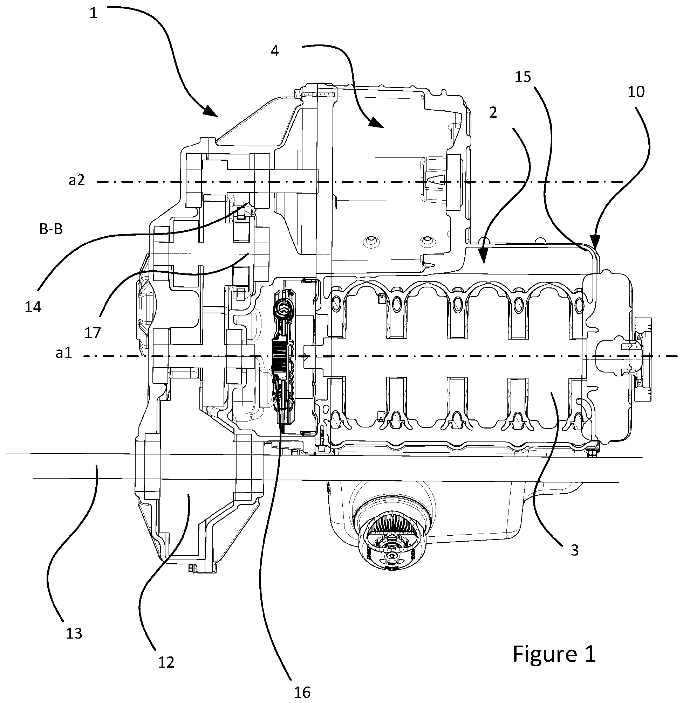

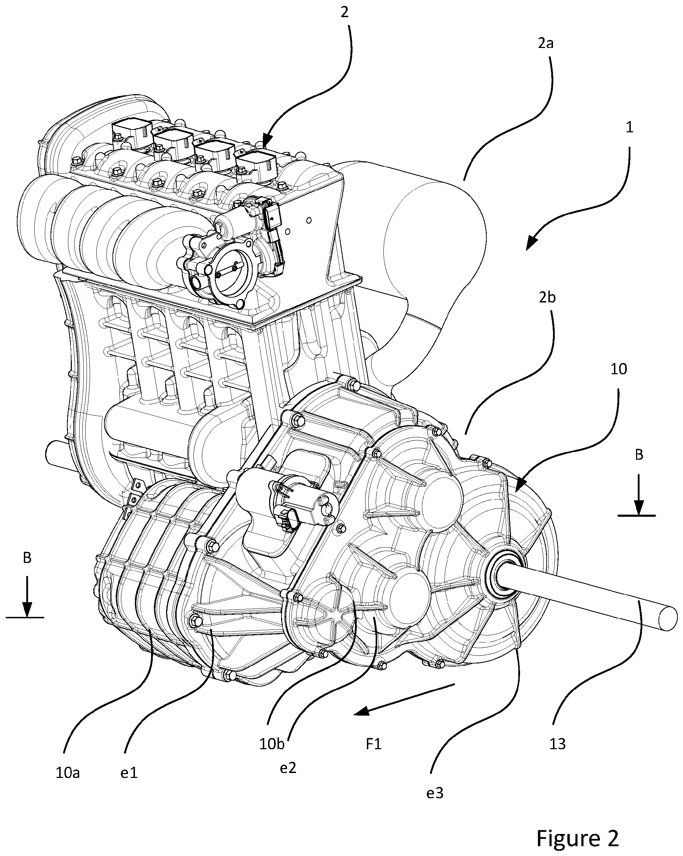

Figure 1 illustrates a cross-sectional view B-B of a hybrid module 1. The cross-section is illustrated in Figure 2.

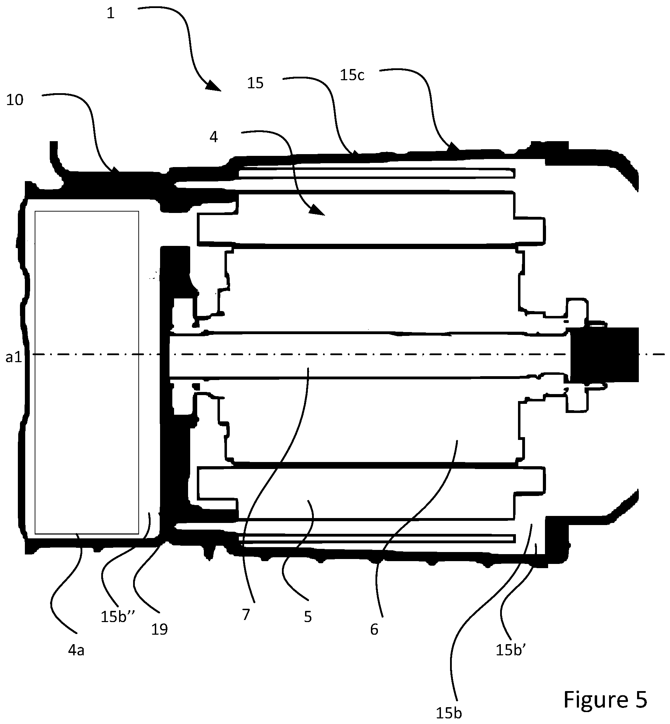

Figure 1 illustrates that the hybrid module 1 comprises an ICE 2 comprising a crankshaft 3. Further, Figure 1 illustrates that the hybrid module 1 comprises an EM 4 comprising a stator 5 and a rotor 6 (stator and rotor are shown in Figure 5) accommodated by the stator 5, the rotor 6 having a rotor shaft 7. Accordingly, the rotor encloses the rotor shaft 7. The EM 4 may be any conventional EM 4 e.g. one that comprises a stator with windings and a rotor with permanent magnets, wherein the rotor rotates relative to the stator. Further, the hybrid module 1 comprises a motor housing 10. The motor housing 10 is dimensioned to accommodate the ICE and the EM 2, 4. Figure 1 illustrates that the crankshaft 3 and the rotor shaft 7 are positioned to have parallel axial extensions a1, a2.

In Figure 1, the motor housing 10 comprises a crankcase portion 15, the crankcase portion 15 enclosing at least part of the crankshaft 3 and at least part of said EM 4. The term "crankcase portion" may refer to a portion of the crankcase that at least partially encloses the crankshaft 3. Accordingly, the motor housing 10 may enclose a lower part 2b (shown in Figure 2) of an ICE 2 comprising at least the crankshaft 3 and a coupling arrangement. Coupling arrangement may comprise intermediate coupling in the form of one or more of shafts/clutches/gears/discs/straps 17 that enable selective connection between at least the EM and the ICE, or the EM, the ICE and the drive shaft, i.e. between the transmission, ICE, EM and drive shaft. The upper part 2a (shown in Figure 2) of the ICE may comprise e.g. valves, pistons and other components as appreciated by a skilled person in the art (not shown). The upper and lower parts 2a, 2b may be connected through an interface or any other mechanical connection. Thus, the housing may be adapted to connect to the upper part 2a, in case the housing accommodates the lower part 2b.

Figure 1 further illustrates that the hybrid module 1 may further comprise a differential 12, a drive shaft 13, a first clutch 14 operable between a closed state that connect the EM and the ICE and an open state that disconnect the EM from the ICE. Further, a second clutch 16 operable between a closed state that connect the EM and the drive shaft and an open state that disconnect the EM and the drive shaft. The first clutch 14 may be a c0 clutch and the second clutch may be a c1 clutch, or vice versa. The differential 12 may connect to the drive shaft 13 and/or an additional axle.

As illustrated in Figure 1, the hybrid module 1 may accommodate/enclose/encircle lower part of the ICE 2, including the crankshaft 3, the EM 4, differential 12, coupling arrangement 17, and a center portion of the drive shaft 13.

In Figure 1, the coupling arrangement which may comprise intermediate shafts, is intermediate axial extensions a1, a2 of the crankshaft 3 and the EM 4, in the same housing 10. Further, the coupling arrangement 17 and corresponding shafts thereof are parallel in their axial extensions with the axial extensions of EM and ICE a1, a2 so to form a compact structure. Accordingly, in Figure 1, the crankshaft is (directly) adjacent the ICE (separated by wall) and the coupling arrangement 17 is located at adjacent a common side part of the ICE 2 and the EM 4. Thus, the housing 10 may form an intermediary space portion.

Figure 2 illustrates an objective view of the hybrid module 1. Illustrating that the ICE 2 may comprise an upper part 2a and a lower part 2b (i.e. relative ground level when mounted). Arrow F1 illustrate a forward direction when implemented in a vehicle (i.e. pointing away from vehicle trunk). However, the orientation of the hybrid module 1 may be the opposite.

Nonetheless, the axial direction of the crankshaft 3 and EM 4 (as illustrated in Figure 1) may be extending in a width direction of the vehicle.

The housing 10 may comprise a chamber for the coupling arrangement, the chamber extending as an axial protrusion (parallel to the axial extensions a1, a2) in a first direction. Thus, the housing 10 may form a central section 10a which hosts at least the EM and at least part of the crankshaft, the central section may extend axially (parallel to the shafts of the EM/ICE) to define a protruding volume 10b that accommodates the coupling arrangement. The central section 10a and protruding volume (may be referred to as edge section) may be integrally formed or define two or more distinct pieces. In one aspect, the central section 10a is one or more pieces and the edge section 10b is one or more pieces.

Figure 2 illustrates the housing 10 may enclose the lower part of the ICE 2 including the crankshaft, the EM and coupling arrangement. Figure 2 illustrates that the housing 10 may be dimensioned to conform with the outer dimensions of at least one of the EM, the coupling arrangement, the lower part of the ICE so to optimize compactness. Accordingly, as illustrated in Figure 2 the housing 10 may comprise a plurality of circular portions e1-e3 each of which molded/casted specifically to correspond to portions of corresponding component. The portions e1-e3 may be integrated or integral.

In Figure 2, the coupling arrangement which may comprise intermediate shafts, is intermediate the crankshaft and the EM. Further, the coupling arrangement and corresponding shafts thereof are parallel in their axial extensions with the axial extensions of EM and ICE a1, a2.

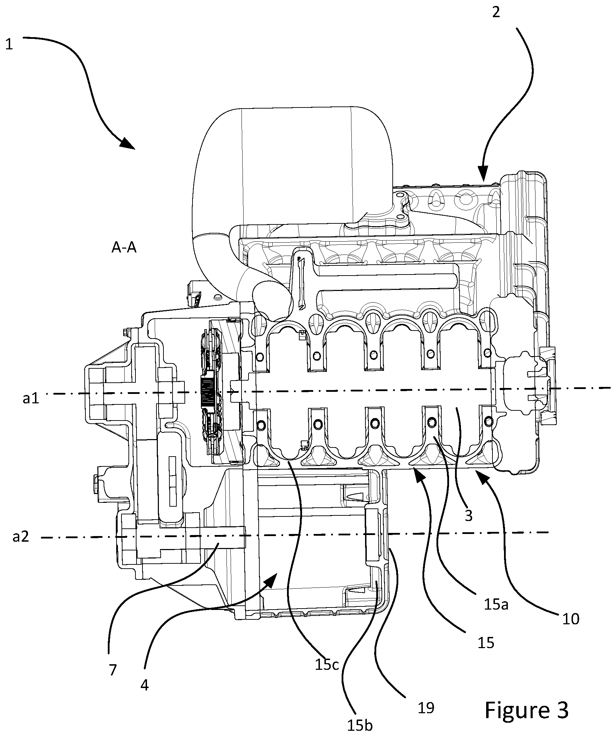

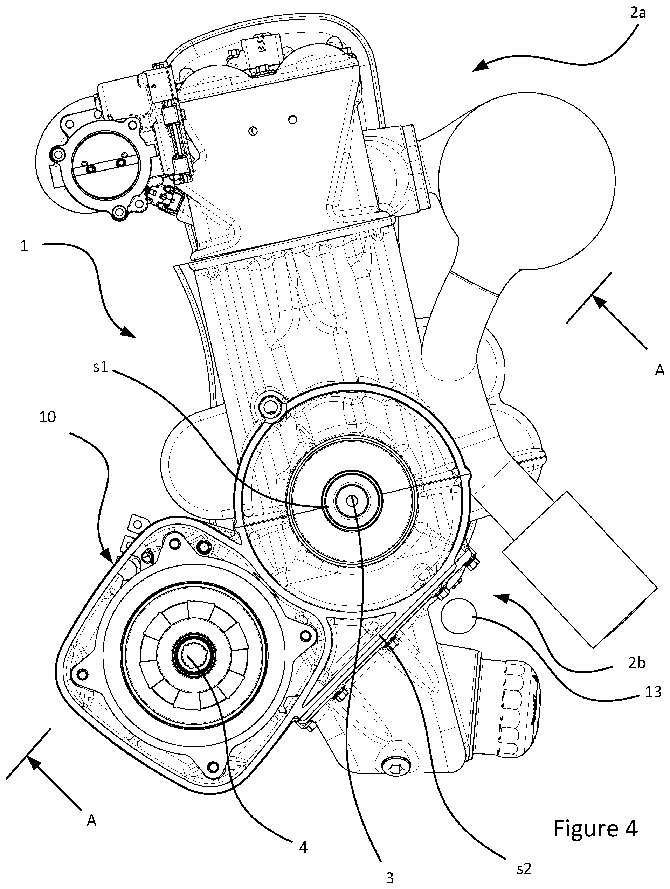

Figure 3 illustrates another cross-sectional view A-A of the hybrid module 1, see Figure 4. Figure 3 illustrates that the motor housing 10 comprises a crankcase portion 15, the crankcase portion 15 enclosing at least part of the crankshaft 3 and at least part of said EM 4, the crankcase portion 15 defining a first chamber 15a and a second chamber 15b, wherein a (integral) bottom wall 15c of the crankcase portion separates the first chamber 15a from said second chamber 15b, wherein the first chamber 15a encloses at least part of the crankshaft 3 and the second chamber 15b encloses least part of said EM 4.

The motor housing 10 of Figure 3 comprises an end-plate 19 for said EM 4, the end-plate 19 being integrally formed with said motor housing 10. Accordingly, the end-plate 19 may be integrated in the housing 10 as a structural part of the housing 10. The end-plate or end-cover may be arranged to seal and/or support the EM 4 end, e.g. so to isolate windings and rotor from the environment.

Figure 4 illustrates a side cross-sectional view of the assembly 1. Figure 4 illustrates that the housing 10 may be formed of more than one part joined by splitline-pairings s1, s2 i.e. matched edges or surfaces where two components of the assembly come together. Figure 4 illustrates that an integral part of the housing 10 encloses at least a partial circumferential part (forming a partial circle in Figure 4) of the crankshaft and the EM 4.

Figure 5 illustrates one aspect of a cut-out cross-sectional part of the housing 10 in which the EM 4 is depicted axially. Figure 5 illustrates that at least a part of the crankcase portion 15 is an integral part dimensioned to accommodate at least part of said crankshaft (not shown in Figure 5) and said stator 5 of the EM 4. Further, Figure 5 illustrates that a stator 5 of said EM 4 may be directly attached to said crankcase portion 15. At a mounted state of said hybrid module 1 in which the hybrid module 1 is mounted in a vehicle, the rotor shaft 7 may be located below or above the crankshaft 3.

Figure 5 illustrates that the crankcase portion 15 encloses said EM 4, the crankcase portion 15 defining a chambers 15a, 15b, wherein a bottom wall 15c of the crankcase portion 15. Thus, the EM and the crankshaft 4, 3 may be located on opposite sides of the wall 15c. Accordingly, chambers 15a, 15b may be at least partially, or fully, defined by an integral structural part.

Figure 5 further illustrates that the end-plate 19 extends vertically within said second chamber 15b partitioning the second chamber 15b into a main chamber and a sub chamber 15b', 15b". Further, Figure 5 illustrates that the end-plate 19 may comprises an inner surface and an opposite outer surface the inner surface facing the main chamber 15b', the outer surface facing the sub chamber 15b", the main chamber 15b' accommodating the EM 4. Accordingly, the sub-chamber 15b" accommodating said inverter 4a. However, it should be noted that different configurations may be provided within the context of the present disclosure. E.g. the inverter may be positioned along the axial extension of the EM 4.

Even though not illustrated, the hybrid module 1 may comprise a secondary EM, wherein the secondary EM is directly, or indirectly connected to the differential 12 to propel the vehicle to define a drive connection, wherein the drive connection is selectively connectable to said generator connection to enable at least one of series-drive mode and parallel-drive mode.

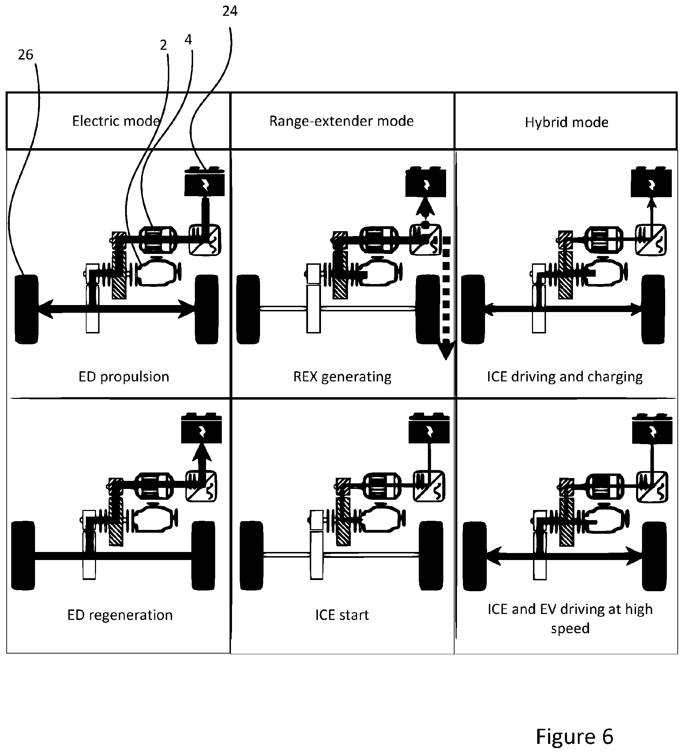

Figure 6 schematically illustrates different modes of the vehicle, namely electric mode, range extender mode (REX) and hybrid mode. Thus, Figure 6 illustrates that in electric mode, electric drive propulsion is enabled in which the EM 4 propels the wheels 26 through power received via the battery pack 24 while ICE 2 is at stand-still. Also, Figure 6 illustrates that in electric mode electric drive generation is also enabled e.g. through regenerative braking. Further, the REX mode illustrates that EM 4 connected to ICE 2 and wheels are disconnected. Further, Figure 6 illustrate the hybrid mode in which EM 4 is connected to both ICE 2 and wheels 26 to allow ICE driving while charging of battery pack 24. Also, the hybrid mode allow ICE and EV driving.

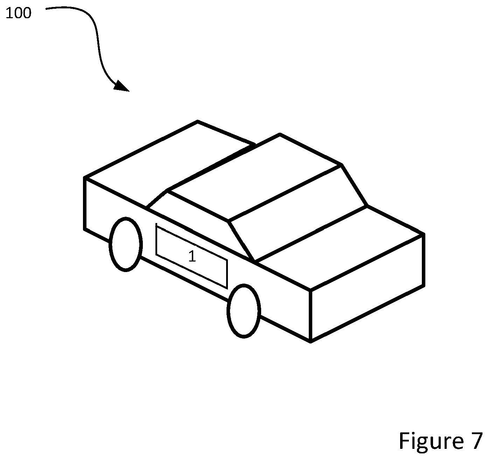

Figure 7 illustrates an objective view of a vehicle 100 comprising the hybrid module 1 as illustrated in any one of the Figures 2-5. The vehicle 100 may be a hybrid vehicle. Thus, the hybrid module 1 may be integrated/mounted into a drivetrain of the vehicle 100.

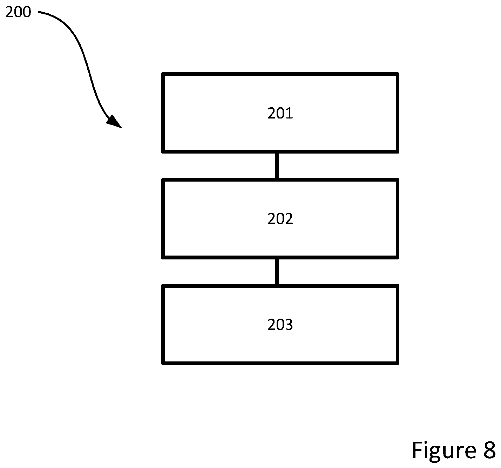

Figure 8 schematically, in the form of a flowchart, illustrates a method 200 for assembling the hybrid module of any aspect herein comprising the steps of providing 201 a motor housing dimensioned to accommodate an EM and at least a part of an ICE. Further, the method comprises mounting 202 the ICE into the motor housing and fastening 203 the EM into the motor housing, preferably by press-fit or bolt. Further, preferably, the step of fastening is performed by directly press-fitting or bolting the stator in the motor housing. The method 200 may also comprise to fasten or attach the crankshaft into the housing.

The step of providing 201 may be performed by molding or casting the housing in one or more than one part, the housing having external dimensions corresponding to at least at part of the ICE and the EM. The housing may be casted in two parts for being joined by splitline-pairings.

## Claims

1. A hybrid module (1) for a vehicle comprising:
- an internal combustion engine, ICE (2) comprising a crankshaft (3)
- an electric machine, EM (4) comprising a stator (5) and a rotor (6) accommodated by the stator (5), the rotor (6) having a rotor shaft (7)
- a motor housing (10)
wherein the motor housing (10) accommodates at least part of the ICE and the EM (2, 4), wherein the crankshaft (3) and the rotor shaft (7) are positioned to have parallel axial extensions (a1, a2).

2. The hybrid module (1) according to claim 1, wherein the motor housing (10) comprises a crankcase portion (15), the crankcase portion (15) enclosing at least part of the crankshaft (3) and at least part of said EM (4).

3. The hybrid module (1) of any one of the preceding claims, wherein the hybrid module (1) comprises a coupling arrangement (17) for mechanically coupling the EM (4) and the ICE (2) to define a generator connection, wherein the coupling arrangement is operable to enable a range-extender mode that:
- operate the ICE (2) to charge a battery pack via the EM (4) and/or power a load.

4. The hybrid module (1) of any one of the preceding claims, wherein the hybrid module further comprises:
- a differential (12)
- a drive shaft (13)
- a first clutch (14) operable between a closed state that connect the EM (4) and the ICE and an open state that disconnect the EM (4) from the ICE
- a second clutch (16) operable between a closed state that connect the EM (4) and the drive shaft and an open state that disconnect the EM and the drive shaft.

5. The hybrid module (1) of claim 4, wherein the hybrid module (1) is arranged to operate in:
- an electric mode, wherein in said electric mode the second clutch (16) is in closed state and the first clutch (14) is open state, the electric mode being operable to propel the vehicle by the EM
- a hybrid mode, HEV, wherein in said HEV mode the first and the second clutch (14, 16) are in closed state, the HEV mode being operable to propel the vehicle by the EM and the ICE in parallel
- a range-extender mode, wherein in said range-extender mode the first clutch (14) is in closed state and the second clutch (16) is in open state, the range-extender mode being operable to generate electrical power using the ICE to recharge the battery pack and/or power a load.

6. The hybrid module (1) of claims 1 and 2, wherein at least a part of the crankcase portion (15) is an integral part dimensioned to accommodate at least part of said crankshaft (3) and said stator (5) of the EM (4).

7. The hybrid module (1) of any one of the claims 2, 6 and 7, wherein a stator (5) of said EM (4) is directly attached to said crankcase portion (15).

8. The hybrid module (1) of any one of the preceding claims, wherein at a mounted state of said hybrid module (1) in which the hybrid module (1) is mounted in a vehicle, the rotor shaft (7) is located below or above the crankshaft (3).

9. The hybrid module (1) of any one of the preceding claims, wherein the motor housing (10) comprises a crankcase portion (15), the crankcase portion (15) enclosing at least part of the crankshaft (3) and at least part of said EM (4), the crankcase portion (15) defining a first chamber and a second chamber (15a, 15b), wherein a bottom wall (15c) of the crankcase portion (15) separates the first chamber from said second chamber (15a, 15b), wherein the first chamber (15a) encloses at least part of the crankshaft (3) and the second chamber (15b) encloses least part of said EM (4).

10. The hybrid module (1) of any one of the preceding claims, wherein the motor housing (10) comprises an end-plate (19) for said EM (4), the end-plate (19) being integrally formed with said motor housing (1).

11. The hybrid module (1) of any one of the preceding claims, wherein the housing (1) accommodate an inverter (4a) of said EM (4).

12. The hybrid module (1) of claims 9-11, wherein the end-plate (19) extends vertically within said second chamber (15b) partitioning the second chamber (15b) into a main chamber and a sub chamber (15b', 15b"), wherein the end-plate (19) comprises an inner surface and an opposite outer surface the inner surface facing the main chamber (15b'), the outer surface facing the sub chamber (15b"), the main chamber (15b') accommodating the EM (4) , the sub-chamber (15b") accommodating said inverter (4a).

13. The hybrid module (1) of claim 3, wherein the hybrid module comprises a secondary EM, wherein the secondary EM is directly, or indirectly connected to a differential to propel the vehicle to define a drive connection, wherein the drive connection is selectively connectable to said generator connection to enable at least one of:
- series-drive mode
- parallel-drive mode.

14. A vehicle (100) comprising the hybrid module (1) of any one of the preceding claims.

15. A method (200) for assembling the hybrid module of any one of the preceding claims comprising:
- providing (201) a motor housing dimensioned to accommodate an EM and at least a part of an ICE
- mounting (202) the ICE into the motor housing
- fastening (203) the EM into the motor housing, preferably by press-fit or bolt.
preferably, the step of fastening is performed by directly press-fitting or bolting the stator in the motor housing.
